# EUROPÄISCHE PATENTANMELDUNG

(11) **EP 4 119 380 A1**
(43) Veröffentlichungstag der Anmeldung: **18.01.2023**
(21) Anmeldenummer: 21185560.6
(22) Anmeldetag: 14.07.2021
(51) Int. Cl.: B60K 17/28, B60K 25/02, B60W 30/188, B60W 10/30, B60L 1/00

(54) **STEUERUNGSANLAGE FÜR VARIABLE DREHZAHLEN EINES KRAFTFAHRZEUGS SOWIE KRAFTFAHRZEUG MIT EINER DEARTIGEN STROMERZEUGUNGSANLAGE**

(71) Anmelder: MARTIN Special Technics GmbH, 86720 Nördlingen (DE)
(72) Erfinder: Martin, Jörg, 86720 Nördlingen (DE); Martin, Ulrich, 86720 Nördlingen (DE)
(74) Vertreter: Schorr, Peter Karl

(57) **Zusammenfassung**

Die Erfindung betrifft eine Stromerzeugungsanlage (2) für variable Drehzahlen eines Kraftfahrzeugs mit mindestens einer Brennkraftmaschine (6), durch die das Kraftfahrzeug zum Bewegen des Kraftfahrzeugs antreibbar ist, mit mindestens einem zuschaltbaren oder permanenten Nebenantrieb (8), der mit der Brennkraftmaschine (6) zumindest im Leerlauf der Brennkraftmaschine (6) des Kraftfahrzeugs verbunden ist, der im mit der Brennkraftmaschine (6) verbundenen Zustand durch die Brennkraftmaschine (6) angetrieben ist und durch den mechanische Antriebsenergie erzeugbar ist, mit mindestens einem Generator (10), der durch den Nebenantrieb (8) der Brennkraftmaschine (6) zumindest im Leerlauf der Brennkraftmaschine (6) des Kraftfahrzeugs antreibbar ist, mit mindestens einer zwischen Nebenantrieb (8) und Generator (10) angeordneten Getriebeeinheit (16), durch die eine in die Getriebeeinheit (16) eingehende Drehzahl in eine in Richtung auf den Generator (10) abgehende Drehzahl veränderbar ist, mit mindestens einer Leistungselektronik (22), die im oder am Generator (10) angeordnet ist und die mindestens einen Inverter (24) umfasst, durch den eine bestimmte Spannung und/oder eine bestimmte Frequenz des Generators (10) an einem Generatorausgang (26) des Generators (10) umwandelbar und/oder bereitstellbar ist, und mit mindestens einem elektrisch betreibbaren Verbraucher (4), der mit dem Generatorausgang (26) verbindbar und durch den Generator (10) mit elektrischer Energie versorgt ist.

## Beschreibung

Die Erfindung betrifft eine Stromerzeugungsanlage für variable Drehzahlen eines Kraftfahrzeugs sowie ein Kraftfahrzeug mit einer derartigen Stromerzeugungsanlage.

Stromerzeugungsanlagen in Kraftfahrzeugen sind aus dem Stand der Technik in unterschiedlichen Bauformen bekannt. Diese dienen dazu, einen Verbraucher, insbesondere ein Kühlaggregat, mit elektrischer Energie zu versorgen. Hierbei ist es insbesondere bei Lastkraftwagen oder bei Transportfahrzeugen wichtig, dass der Verbraucher permanent mit elektrischer Energie versorgbar ist, um beispielsweise eine Kühlung für ein zu transportierendes Lebensmittel ununterbrochen auf einem ausreichend hohen Niveau aufrechtzuerhalten.

Bei den bekannten Kraftfahrzeugen wird die Stromerzeugungsanlage unmittelbar durch die Brennkraftmaschine, insbesondere einer damit unmittelbar verbundenen Lichtmaschine, mit elektrischer Energie versorgt. Bei Leerlauf der Brennkraftmaschine, beispielsweise bei einem Halten an einer roten Ampel oder in einem Verkehrsstau, ist solchenfalls ein durchgehendes Versorgen des Verbrauchers mit ausreichend hoher elektrischer Energie nicht gewährleistbar.

Aus dem Stand der Technik ist es bekannt zusätzlich zur Brennkraftmaschine des Kraftfahrzeugs eine zusätzliche Brennkraftmaschine, wie beispielsweise Dieselaggregat, vorzusehen, um den Verbraucher permanent mit elektrischer Energie versorgen zu können. Hierdurch wird das Gewicht des Kraftfahrzeugs erhöht. Darüber hinaus muss Bauraum im Kraftfahrzeug vorgehalten werden.

Aufgabe eines Ausführungsbeispiels der Erfindung ist, eine Stromerzeugungsanlage für variable Drehzahlen eines Kraftfahrzeugs sowie ein Kraftfahrzeug mit einer derartigen Stromerzeugungsanlage vorzuschlagen, bei der im Kraftfahrzeug vorhandene Komponenten effizient nutzbar sind.

Diese Aufgabe wird gelöst durch eine Stromerzeugungsanlage für variable Drehzahlen eines Kraftfahrzeugs mit mindestens einer Brennkraftmaschine, durch die das Kraftfahrzeug zum Bewegen des Kraftfahrzeugs antreibbar ist, mit mindestens einem zuschaltbaren oder permanenten Nebenantrieb, der mit der Brennkraftmaschine zumindest im Leerlauf der Brennkraftmaschine des Kraftfahrzeugs verbunden ist, der im mit der Brennkraftmaschine verbundenen Zustand durch die Brennkraftmaschine angetrieben ist und durch den mechanische Antriebsenergie erzeugbar ist, mit mindestens einem Generator, der durch den Nebenantrieb der Brennkraftmaschine zumindest im Leerlauf der Brennkraftmaschine des Kraftfahrzeugs antreibbar ist, mit mindestens einer zwischen Nebenantrieb und Generator angeordneten Getriebeeinheit, durch die eine in die Getriebeeinheit eingehende Drehzahl in eine in Richtung auf den Generator abgehende Drehzahl veränderbar ist, mit mindestens einer Leistungselektronik, die im oder am Generator angeordnet ist und die mindestens einen Inverter umfasst, durch den eine bestimmte Spannung und/oder eine bestimmte Frequenz des Generators an einem Generatorausgang des Generators umwandelbar und/oder bereitstellbar ist, und mit mindestens einem elektrisch betreibbaren Verbraucher, der mit dem Generatorausgang verbindbar und durch den Generator mit elektrischer Energie versorgbar oder versorgt ist.

Dadurch, dass durch die Stromerzeugungsanlage für variable Drehzahlen ein Nebenantrieb vorgesehen ist, kann hierdurch auf einfache Weise Antriebsenergie der Brennkraftmaschine abgezweigt werden. Dadurch, dass der Nebenantrieb zuschaltbar oder permanent mit der Brennkraftmaschine verbunden ist, kann der Nebenantrieb, wenn er nicht benötigt wird, von der Brennkraftmaschine ausgekoppelt werden. Hierdurch kann die Energie der Brennkraftmaschine effizient genutzt werden, insbesondere ungenutzte Verluste reduziert werden.

Dadurch, dass der Nebenantrieb zumindest im Leerlauf der Brennkraftmaschine mit der Brennkraftmaschine verbunden ist, ist gewährleistet, dass der Generator durch den Nebenantrieb zumindest im Leerlauf der Brennkraftmaschine antreibbar ist. Hierdurch ist durch den Generator der Verbraucher auch im Leerlauf der Brennkraftmaschine mit ausreichend Energie versorgbar.

Durch das Vorsehen einer Getriebeeinheit zwischen Nebenantrieb und Generator, können bei Leerlauf der Brennkraftmaschine auch geringe Drehzahlen des Nebenantriebs auf eine ausreichende Drehzahl zum Betreiben des Generators gesteigert werden.

Der Nebenantrieb kann Drehzahlen von ca. 1200 U/min beim Fahren des Kraftfahrzeugs umfassen und im Leerlauf der Brennkraftmaschine ca. 600 U/min. Durch die Getriebeeinheit sind diese ca. 600 U/min steigerbar auf eine Drehzahl von ca. 1500 U/min, die in die Generatoreinheit eingehen.

Durch die Generatoreinheit ist ein Drehfeld mit 3-Phasen erzeugbar, wobei hierbei eine Spannung von 400 V bereitstellbar ist, bei einer Frequenz von 20 bis 60 Hz sowie einer Leistung zwischen 15 und 30 kW. Neben einem 3 Phasendrehfelds können auch 1 phasig 230V und auch 300-750V DC (Gleichstrom) erzeugt werden.

Der Nebenantrieb kann eine Zapfwelle, wie Motorzapfwelle, Getriebezapfwelle oder Wegzapfwelle, oder einen Riementrieb umfassen, welcher eine Welle mit Flansch aufweisen kann.

Um eine Kraft bzw. ein Drehmoment vom Nebenantrieb in Richtung Generator übertragen zu können, umfasst eine Ausführungsform der Stromerzeugungsanlage mindestens ein zwischen Nebenantrieb und Getriebeeinheit angeordnetes Kraftübertragungsmittel, durch das eine Antriebskraft des Nebenantriebs an die Getriebeeinheit übertragbar ist und mindestens eine zwischen Getriebe und Generator angeordnete Generatorwelle.

Hierdurch wird die Kraft bzw. das Drehmoment durch den Nebenantrieb über das Kraftübertragungsmittel mit einer Nebenantriebdrehzahl in die Getriebeeinheit eingeleitet und von der Getriebeeinheit in eine Generatordrehzahl umgewandelt und über die Generatorwelle an den Generator übertragen.

Das Kraftübertragungsmittel kann grundsätzlich beliebig ausgebildet sein. Es lässt sich einfach und kostengünstig umsetzen, wenn das Kraftübertragungsmittel ein Zahnrad, eine Kette, einen Riemen, eine gebogene Welle und/oder eine Gelenkwelle umfasst, durch die der Antrieb mit der Getriebeeinheit verbindbar oder verbunden ist.

Wenn das Kraftübertragungsmittel einen Riemen, eine gebogene Welle und/oder eine Gelenkwelle umfasst, ist das Anordnen des Generators an einer ausreichend, ungenutzten Bauraum umfassenden Stelle des Kraftfahrzeugs vereinfacht anordenbar und die Kraft bzw. das Drehmoment des Nebenantriebs vereinfacht weiterleitbar.

Grundsätzlich ist es denkbar, dass bei Leerlauf der Brennkraftmaschine ausschließlich der Nebenantrieb in den Antriebsstrang der Brennkraftmaschine einkoppelbar ist. Darüber hinaus sind Ausführungsformen der Stromerzeugungsanlage denkbar, bei denen der Nebenantrieb permanent mit der Brennkraftmaschine verbunden ist. Solchenfalls erweist es sich als vorteilhaft, wenn die Stromerzeugungsanlage mindestens eine zwischen Nebenantrieb und Getriebeeinheit angeordnete Kupplung umfasst, durch die die Getriebeeinheit zumindest bei Leerlauf der Brennkraftmaschine des Kraftfahrzeugs mit dem Kraftübertragungsmittel verbindbar oder vom Kraftübertragungsmittel trennbar ist, insbesondere bei Last der Brennkraftmaschine des Kraftfahrzeugs.

Solchenfalls kann der Generator an einen permanent angetriebenen Nebenantrieb bei Leerlauf der Brennkraftmaschine eingekoppelt werden.

Die Kupplung kann in dem Kraftübertragungsmittel ausgebildet sein oder einen Übergang von Kraftübertragungsmittel an Getriebeeinheit angeordnet sein.

Bei einer Ausführungsform kann ein Freilauf zwischen Kupplung und Getriebeeinheit vorgesehen sein Dieser kann beim Starten oder Ausschalten der Brennkraftmaschine sowie bei hohen Getriebeübersetzungen geschattet werden.

Ferner erweist es sich bei einer Weiterbildung der Stromerzeugungsanlage als vorteilhaft, wenn die Stromerzeugungsanlage mindestens einen Drehmomentbegrenzer erfasst, durch den die vom Nebenantrieb in Richtung auf die Getriebeeinheit übertragene Kraft begrenzbar ist.

Hierdurch ist die Gefahr einer Beschädigung der Getriebeeinheit und des Generators zumindest reduziert.

Der Drehmomentbegrenzer lässt sich einfach und kostengünstig ausbilden, wenn die Kupplung den Drehmomentbegrenzer umfasst, insbesondere, wenn die Kupplung eine Rutschkupplung umfasst.

Hierdurch lässt sich die Stromerzeugungsanlage bauteilreduziert ausbilden.

Um eine ausreichend hohe Drehzahl der Generatorwelle gewährleisten zu können, erweist es sich als vorteilhaft, wenn die Getriebeeinheit ein Übersetzungsverhältnis, mit dem die in die Getriebeeinheit eingehende Drehzahl in die in Richtung auf den Generator abgehende Drehzahl veränderbar ist, mindestens 1:1,5, insbesondere mindestens 1:2, insbesondere mindestens 1:2,5, insbesondere mindestens 1: 5, insbesondere mindestens 1:55, umfasst.

Hierdurch kann gewährleistet werden, dass auch bei geringen Drehzahlen des Nebenantriebs eine ausreichend hohe Drehzahl am Generator vorherrscht.

Ferner erweist es sich bei einer Weiterbildung letztgenannter Ausführungsform als vorteilhaft, wenn die Getriebeeinheit und die Leistungselektronik einander funktional zugeordnet sind und dass die Getriebeeinheit durch die Leistungselektronik zum automatischen Einstellen einer Drehzahl am Generator, insbesondere an der Generatorwelle, von 1500 U/min ansteuerbar ist.

Hierdurch kann, insbesondere unabhängig von der Drehzahl des Nebenantriebs, im Leerlauf der Brennkraftmaschine eine ausreichend hohe, insbesondere eine konstante, Drehzahl des Generators gewährleistet werden.

Die Qualität der Stromerzeugungsanlage, insbesondere der durch den Generator zur Verfügung gestellten Leistung, lässt sich weiter verbessern, wenn die Leistungselektronik mindestens ein Sensormittel umfasst, durch das eine Drehzahl der Generatorwelle erfassbar ist.

Der Generator kann grundsätzlich eine beliebige Art von Generator umfassen. Bei einer Ausführungsform der Stromerzeugungsanlage erweist es sich als vorteilhaft, wenn der Generator einen Asynchrongenerator umfasst.

Durch Verwenden eines Asynchrongenerators wird auf ein Drehfeld zurückgegriffen, das in einem Luftspalt zwischen Stator und Rotor radial gerichtet ist. Dreht sich der Rotor langsamer als das Drehfeld, so ändert sich der magnetische Fluss, was eine Spannung induziert, die wiederum einen Strom hervorruft. Der Strom ist proportional zur Änderungsrate des Flusses.

Durch Verwenden eines Asynchrongenerators wird auf einen Generator zurückgegriffen, der eine nahezu konstante Drehzahl im Leerlauf umfasst. Darüber hinaus ist ein Asynchrongenerator kurzzeitig stark überlastbar. Ferner ist der Asynchrongenerator für hohe Drehzahlen tauglich und im Betrieb mit einem Frequenzumrichter mit durchgehend hohem Wirkungsgrad betreibbar.

Bei einer Ausführungsform der Stromerzeugungsanlage ist vorgesehen, dass durch die Leistungselektronik des Generators das Drehfeld des Generators in eine Gleichspannung am Generatorausgang richtbar ist.

Hierdurch kann ein Verbraucher am Generatorausgang am Generator verbunden werden, der durch Gleichspannung, also durch Gleichstrom, betreibbar ist.

Um eine ausreichend hohe Spannung am Generatorausgang zur Verfügung zu stellen, erweist es sich als vorteilhaft, wenn die Leistungselektronik einen Frequenzumformer umfasst und/oder dass durch die Leistungselektronik eine Gleichspannung von mindestens 360 V, insbesondere mindestens 400 V, am Generatorausgang zur Verfügung stellbar ist.

Hierdurch kann eine ausreichend hohe Spannung am Generatorausgang zur Verfügung gestellt werden, um den Verbraucher stets, insbesondere bei Leerlauf der Brennkraftmaschine, mit ausreichend elektrischer Energie zu versorgen.

Die Leistungselektronik lässt sich einfach und kostengünstig im oder am Generator realisieren, wenn die Leistungselektronik eine Platine umfasst, die am Generator festgelegt ist, insbesondere im oder mit dem Generator vergossen ist.

Solchenfalls ist die Platine, insbesondere, wenn sie im oder mit dem Generator vergossen ist, gegen Vibrationen oder Erschütterungen geschützt.

Der elektrische Verbraucher kann grundsätzlich beliebig ausgebildet sein und beispielsweise einen permanent zu betreibenden Verbraucher umfassen. Wenn das Kraftfahrzeug beispielsweise einen Lastkraftwagen oder ein Transportfahrzeug umfasst, durch das Lebensmittel, insbesondere zu kühlende Lebensmittel, zu transportieren sind, erweist es sich als vorteilhaft, wenn der elektrische Verbraucher ein Kühlaggregat umfasst.

Darüber hinaus wird die Aufgabe gelöst durch ein Kraftfahrzeug mit mindestens einer Brennkraftmaschine, durch die das Kraftfahrzeug zum Bewegen des Kraftfahrzeugs antreibbar ist, mit mindestens einem zuschaltbaren oder permanenten Nebenantrieb, der mit der Brennkraftmaschine zumindest im Leerlauf der Brennkraftmaschine des Kraftfahrzeugs verbunden ist, der im mit der Brennkraftmaschine verbundenen Zustand durch die Brennkraftmaschine angetrieben ist und durch den mechanische Antriebsenergie erzeugbar ist, mit mindestens einem elektrisch betreibbaren Verbraucher und mit mindestens einer Stromerzeugungsanlage für variable Drehzahlen, mit mindestens einem der zuvor genannten Merkmale, die mindestens einen Generator, der durch den Nebenantrieb der Brennkraftmaschine zumindest im Leerlauf der Brennkraftmaschine des Kraftfahrzeugs antreibbar ist, die mindestens eine zwischen Nebenantrieb und Generator angeordnete Getriebeeinheit, durch die eine in die Getriebeeinheit eingehende Drehzahl in eine in Richtung auf den Generator abgehende Drehzahl veränderbar ist, und die mindestens eine Leistungselektronik aufweist, die im oder am Generator angeordnet ist und die mindestens einen Inverter umfasst, durch den eine bestimmte Spannung und/oder eine bestimmte Frequenz des Generators an einem Generatorausgang des Generators umwandelbar und/oder bereitstellbar ist, wobei der mindestens eine elektrisch betreibbare Verbraucher mit dem Generatorausgang verbindbar und durch den Generator mit elektrischer Energie versorgbar oder versorgt ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Stromerzeugungsanlage.

In der Zeichnung zeigt:

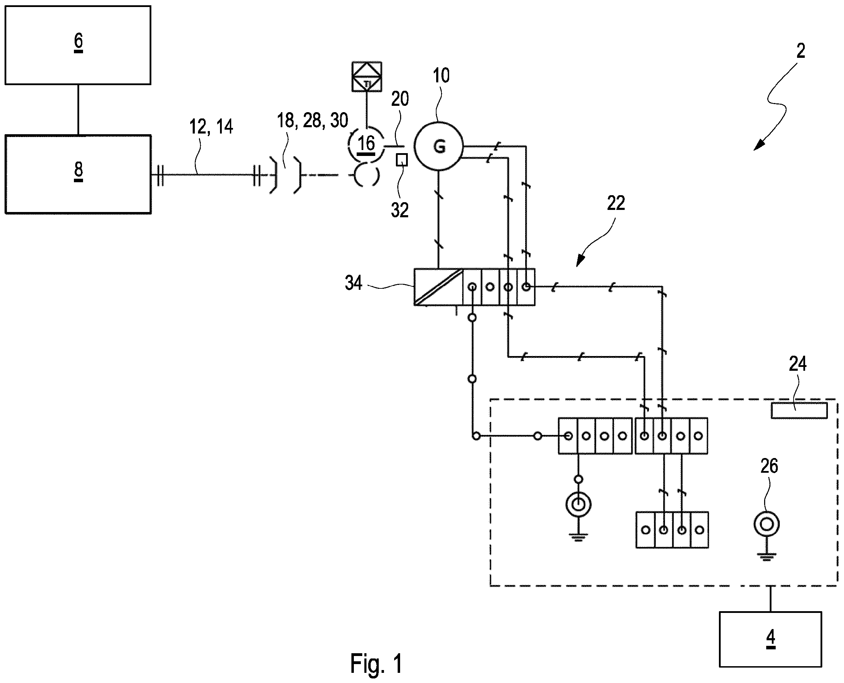

- Figur 1: Ein schematisches Schaltbild einer Ausführungsform der Stromerzeugungsanlage.

Figur 1 zeigt ein schematisches Schaltbild eines ersten Ausführungsbeispiels einer insgesamt mit dem Bezugszeichen 2 versehenen Stromerzeugungsanlage. Diese ist für variable Drehzahlen eines Kraftfahrzeugs dazu geeignet stets ausreichend elektrische Energie für einen Verbraucher 4 zur Verfügung zu stellen.

Die Stromerzeugungsanlage 2 ist in einem Kraftfahrzeug (in der Figur nicht explizit dargestellt) angeordnet. Das Kraftfahrzeug umfasst eine Brennkraftmaschine 6, durch die das Kraftfahrzeug zum Bewegen des Kraftfahrzeugs antreibbar ist. Die Stromerzeugungsanlage 2 umfasst einen Nebenantrieb 8, der bei dem in Figur 1 gezeigten Ausführungsbeispiel permanent mit der Brennkraftmaschine 6 des Kraftfahrzeugs verbunden ist.

Der Nebenantrieb 8 ist seinerseits mit einem Generator 10 der Stromerzeugungsanlage 2 mittelbar verbunden. Seitens des Nebenantriebs 8 wird eine Antriebskraft über ein als Gelenkwelle 12 ausgebildetes Kraftübertragungsmittel 14 auf eine Getriebeeinheit 16 übertragen. Um die Getriebeeinheit 16 vom Nebenantrieb 8 zu trennen, umfasst die Stromerzeugungsanlage 2 einen zwischen Nebenantrieb 8 und Getriebeeinheit 16 angeordnete Kupplung 18. Durch diese ist die Getriebeeinheit 16 und hierdurch der Generator 10 in Richtung Nebenantrieb 8 zuschaltbar, insbesondere, wenn sich die Brennkraftmaschine 6 des Kraftfahrzeugs im Leerlauf befindet.

Die Getriebeeinheit 16 ist ihrerseits mittels einer Generatorwelle 20 mit dem Generator 10 verbunden.

Durch die Getriebeeinheit 16 ist eine in die Getriebeeinheit 16 aus Richtung Nebenantrieb 8 eingehende Drehzahl in eine in Richtung auf den Generator 10 abgehende Drehzahl veränderbar. Hierdurch ist es ermöglicht, den Generator 10 unabhängig von der seitens des Nebenantriebs 8 eingehenden Drehzahl auf einer Drehzahl von ca. mindestens 1500 U/min im Leerlauf der Brennkraftmaschen 6 und auf einer Drehzahl von ca. mindestens 10.000 U/min im Fahrbetrieb der Brennkraftmaschen 6 zu betreiben.

Im Generator 10 ist eine Leistungselektronik 22 angeordnet, die mindestens einen Inverter 24 umfasst, durch den eine bestimmte Spannung und/oder eine bestimmte Frequenz des Generators 10 an einem Generatorausgang 26 des Generators 10 umwandelbar ist. An den Generatorausgang 26 ist der Verbraucher 4 koppelbar.

Bei dem in der Figur gezeigten Ausführungsbeispiel umfasst die Kupplung 18 einen Drehmomentbegrenzer 28, durch den die vom Nebenantrieb 8 in Richtung auf die Getriebeeinheit 16 übertragene Kraft begrenzbar ist. Der Drehmomentbegrenzer 28 kann beispielsweise eine Rutschkupplung 30 umfassen. Um eine Genauigkeit der Arbeitsweise der Leistungselektronik 22 zu erhöhen, umfasst diese ein Sensormittel 32, durch das eine Drehzahl der Generatorwelle 20 erfassbar ist.

Bei dem in der Figur gezeigten Ausführungsbeispiel der Stromerzeugungsanlage 2 ist die Leistungselektronik 22 auf einer Platine 34 ausgebildet, die am Generator 10 festgelegt ist, insbesondere im oder mit dem Generator 10 vergossen ist.

Das in der Figur gezeigte Ausführungsbeispiel umfasst einen Verbraucher 4, der als Kühlaggregat ausgebildet ist.

Die in der vorstehenden Beschreibung, in den Ansprüchen sowie in der Zeichnung offenbarten Merkmale der Erfindung, können sowohl einzeln, als auch in jeder beliebigen Kombination bei der Verwirklichung der Erfindung in ihren verschiedenen Ausführungsformen wesentlich sein.

### Bezugszeichenliste

- 2: Stromerzeugungsanlage
- 4: Verbraucher
- 6: Brennkraftmaschine
- 8: Nebenantrieb
- 10: Generator
- 12: Gelenkquelle
- 14: Kraftübertragungsmittel
- 16: Getriebeeinheit
- 18: Kupplung
- 20: Generatorwelle
- 22: Leistungselektronik
- 24: Inverter
- 26: Generatorausgang
- 28: Drehmomentbegrenzer
- 30: Rutschkupplung
- 32: Sensormittel
- 34: Platine

## Patentansprüche

1. Stromerzeugungsanlage (2) für variable Drehzahlen eines Kraftfahrzeugs mit mindestens einer Brennkraftmaschine (6), durch die das Kraftfahrzeug zum Bewegen des Kraftfahrzeugs antreibbar ist, mit mindestens einem zuschaltbaren oder permanenten Nebenantrieb (8), der mit der Brennkraftmaschine (6) zumindest im Leerlauf der Brennkraftmaschine (6) des Kraftfahrzeugs verbunden ist, der im mit der Brennkraftmaschine (6) verbundenen Zustand durch die Brennkraftmaschine (6) angetrieben ist und durch den mechanische Antriebsenergie erzeugbar ist, mit mindestens einem Generator (10), der durch den Nebenantrieb (8) der Brennkraftmaschine (6) zumindest im Leerlauf der Brennkraftmaschine (6) des Kraftfahrzeugs antreibbar ist, mit mindestens einer zwischen Nebenantrieb (8) und Generator (10) angeordneten Getriebeeinheit (16), durch die eine in die Getriebeeinheit (16) eingehende Drehzahl in eine in Richtung auf den Generator (10) abgehende Drehzahl veränderbar ist, mit mindestens einer Leistungselektronik (22), die im oder am Generator (10) angeordnet ist und die mindestens einen Inverter (24) umfasst, durch den eine bestimmte Spannung und/oder eine bestimmte Frequenz des Generators (10) an einem Generatorausgang (26) des Generators (10) umwandelbar und/oder bereitstellbar ist, und mit mindestens einem elektrisch betreibbaren Verbraucher (4), der mit dem Generatorausgang (26) verbindbar und durch den Generator (10) mit elektrischer Energie versorgbar oder versorgt ist.

2. Stromerzeugungsanlage (2) nach Anspruch 1, **gekennzeichnet durch** mindestens ein zwischen Nebenantrieb (8) und Getriebeeinheit (16) angeordnetes Kraftübertragungsmittel (14), durch das eine Antriebskraft des Nebenantriebs (8) an die Getriebeeinheit (16) übertragbar ist und/oder durch mindestens eine zwischen Getriebeeinheit (16) und Generator (10) angeordnete Generatorwelle (20).

3. Stromerzeugungsanlage (2) nach Anspruch 2, **dadurch gekennzeichnet, dass** das Kraftübertragungsmittel (14) ein Zahnrad, eine Kette, einen Riemen, eine gebogene Welle und/oder eine Gelenkwelle umfasst, durch das/die der Antrieb mit der Getriebeeinheit (16) verbindbar oder verbunden ist.

4. Stromerzeugungsanlage (2) nach einem der Ansprüche der vorhergehenden Ansprüche, **gekennzeichnet durch** mindestens eine zwischen Nebenantrieb (8) und Getriebeeinheit (16) angeordnete Kupplung (18), durch die die Getriebeeinheit (16) zumindest bei Leerlauf der Brennkraftmaschine (6) des Kraftfahrzeugs mit dem Kraftübertragungsmittel (14) verbindbar oder vom Kraftübertragungsmittel (14) trennbar ist, insbesondere bei Last der Brennkraftmaschine (6) des Kraftfahrzeugs.

5. Stromerzeugungsanlage (2) nach einem der vorhergehenden Ansprüche, **gekennzeichnet durch** mindestens einen Drehmomentbegrenzer (28), durch den die vom Nebenantrieb (8) in Richtung auf die Getriebeeinheit (16) übertragene Kraft begrenzbar ist.

6. Stromerzeugungsanlage (2) nach Anspruch 5, **dadurch gekennzeichnet, dass** die Kupplung (18) den Drehmomentbegrenzer (28) umfasst, insbesondere dass die Kupplung (18) eine Rutschkupplung (30) umfasst.

7. Stromerzeugungsanlage (2) nach einem der vorhergehenden Ansprüche, **dadurch gekennzeichnet, dass** die Getriebeeinheit (16) ein Übersetzungsverhältnis, mit dem die in die Getriebeeinheit (16) eingehende Drehzahl in die in Richtung auf den Generator (10) abgehende Drehzahl veränderbar ist, mindestens 1:1,5, insbesondere mindestens 1:2, insbesondere mindestens 1:2,5, insbesondere mindestens 1: 5, insbesondere mindestens 1:55, umfasst.

8. Stromerzeugungsanlage (2) nach Anspruch 7, **dadurch gekennzeichnet, dass** die Getriebeeinheit (16) und die Leistungselektronik (22) einander funktional zugeordnet sind und dass die Getriebeeinheit (16) durch die Leistungselektronik (22) zum automatischen Einstellen einer Drehzahl am Generator (10), insbesondere an der Generatorwelle (20), von 1500 U/min ansteuerbar ist.

9. Stromerzeugungsanlage (2) nach einem der vorhergehenden Ansprüche 2 bis 8, **dadurch gekennzeichnet, dass** die Leistungselektronik (22) mindestens ein Sensormittel (32) umfasst, durch das eine Drehzahl der Generatorwelle (20) erfassbar ist.

10. Stromerzeugungsanlage (2) nach einem der vorhergehenden Ansprüche, **dadurch gekennzeichnet, dass** der Generator (10) einen Asynchrongenerator umfasst.

11. Stromerzeugungsanlage (2) nach einem der vorhergehenden Ansprüche, **dadurch gekennzeichnet, dass** durch die Leistungselektronik (22) des Generators (10) das Drehfeld des Generators (10) in eine Gleichspannung am Generatorausgang (26) richtbar ist.

12. Stromerzeugungsanlage (2) nach einem der vorhergehenden Ansprüche, **dadurch gekennzeichnet, dass** die Leistungselektronik (22) einen Frequenzumformer umfasst und/oder dass durch die Leistungselektronik (22) eine Gleichspannung von mindestens 360 V, insbesondere mindestens 400 V, am Generatorausgang (26) zur Verfügung stellbar ist.

13. Stromerzeugungsanlage (2) nach einem der vorhergehenden Ansprüche, **dadurch gekennzeichnet, dass** die Leistungselektronik (22) eine Platine (34) umfasst, die am Generator (10) festgelegt ist, insbesondere im oder mit dem Generator (10) vergossen ist.

14. Stromerzeugungsanlage (2) nach einem der vorhergehenden Ansprüche, **dadurch gekennzeichnet, dass** der elektrische Verbraucher (4) ein Kühlaggregat umfasst.

15. Kraftfahrzeug mit mindestens einer Brennkraftmaschine (6), durch die das Kraftfahrzeug zum Bewegen des Kraftfahrzeugs antreibbar ist, mit mindestens einem zuschaltbaren oder permanenten Nebenantrieb (8), der mit der Brennkraftmaschine (6) zumindest im Leerlauf der Brennkraftmaschine (6) des Kraftfahrzeugs verbunden ist, der im mit der Brennkraftmaschine (6) verbundenen Zustand durch die Brennkraftmaschine (6) angetrieben ist und durch den mechanische Antriebsenergie erzeugbar ist, mit mindestens einem elektrisch betreibbaren Verbraucher (4) und mit mindestens einer Stromerzeugungsanlage (2) für variable Drehzahlen, nach einem der Ansprüche 1 bis 14, die mindestens einen Generator (10), der durch den Nebenantrieb (8) der Brennkraftmaschine (6) zumindest im Leerlauf der Brennkraftmaschine (6) des Kraftfahrzeugs antreibbar ist, die mindestens eine zwischen Nebenantrieb (8) und Generator (10) angeordnete Getriebeeinheit (16), durch die eine in die Getriebeeinheit (16) eingehende Drehzahl in eine in Richtung auf den Generator (10) abgehende Drehzahl veränderbar ist, und die mindestens eine Leistungselektronik (22) aufweist, die im oder am Generator (10) angeordnet ist und die mindestens einen Inverter (24) umfasst, durch den eine bestimmte Spannung und/oder eine bestimmte Frequenz des Generators (10) an einem Generatorausgang (26) des Generators (10) umwandelbar und/oder bereitstellbar ist, wobei der mindestens eine elektrisch betreibbare Verbraucher (4) mit dem Generatorausgang (26) verbindbar und durch den Generator (10) mit elektrischer Energie versorgbar oder versorgt ist.
